(19) Europäisches Patentamt
European Patent Office
Office européen des brevets

(11) **EP 3 044 550 B1**

(12) **EUROPEAN PATENT SPECIFICATION**

(45) Date of publication and mention of the grant of the patent:
**01.05.2019 Bulletin 2019/18**

(21) Application number: **14844358.3**

(22) Date of filing: **11.09.2014**

(51) Int Cl.:
*G01D 5/12* [(2006.01)]       *G01D 5/20* [(2006.01)]
*G01D 5/24* [(2006.01)]       *G01D 5/14* [(2006.01)]

(86) International application number:
**PCT/US2014/055231**

(87) International publication number:
**WO 2015/038800 (19.03.2015 Gazette 2015/11)**

(54) **DEVICES AND METHODS RELATED TO HIGH-RESOLUTION MULTI-TURN SENSORS**

VORRICHTUNGEN UND VERFAHREN IM ZUSAMMENHANG MIT HOCHAUFLÖSENDEN SENSOREN MIT MEHREREN WINDUNGEN

DISPOSITIFS ET PROCÉDÉS RELATIFS À DES CAPTEURS MULTI-TOUR À HAUTE RÉSOLUTION

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: **11.09.2013 US 201361876738 P**

(43) Date of publication of application:
**20.07.2016 Bulletin 2016/29**

(73) Proprietor: **Bourns Incorporated**
**Riverside, CA 92507 (US)**

(72) Inventors:
 • **BOGOS, Eugen**
   **Riverside, CA 92507 (US)**
 • **COUCH, Christopher**
   **Riverside, CA 92507 (US)**
 • **WEHLMANN, Perry**
   **Riverside, CA 92507 (US)**

(74) Representative: **Hewett, Jonathan Michael Richard et al**
**Venner Shipley LLP**
**200 Aldersgate**
**London EC1A 4HD (GB)**

(56) References cited:
EP-A2- 1 018 466          DE-A1-102005 011 099
DE-A1-102010 030 801      US-A1- 2003 090 265
US-A1- 2008 116 886       US-A1- 2010 163 333
US-A1- 2011 074 399       US-A1- 2011 121 824
US-A1- 2013 015 844       US-A1- 2013 015 844

**Description**

<u>BACKGROUND</u>

<u>Field</u>

The present disclosure generally relates to devices and methods related to high-resolution multi-turn sensors.

<u>Description of the Related Art</u>

In many mechanical and/or electromechanical devices, it is desirable to accurately determine a state of a rotating object. For example, a rotating object such as a jackscrew imparts linear motion to another object by its rotation. In many situations, it is desirable to accurately determine the linearly moving object's location. Such determination can be based on knowing the angular position of the rotating object. German Patent Application DE 10 2010 030801 discloses a rotary transducer for determining a rotatable position of a rotatable shaft. United States Patent Application US 2010/163,333 discloses an example of an angular position sensor for determining angular position.

<u>SUMMARY</u>

In some implementations, the present disclosure relates to a position sensing device that includes a shaft having a longitudinal axis, and a first sensor assembly having a magnet and a magnetic sensor. The magnet is coupled to the shaft, and the magnetic sensor is positioned relative to the magnet such that the first sensor assembly allows measurement of an angular position of the magnet relative to the magnetic sensor to thereby allow determination of the corresponding angular position of the shaft within a given turn of the shaft. The position sensing device further includes a second sensor assembly coupled to the shaft and configured to allow measurement of a turn-number of the shaft. The second sensor assembly includes a non-magnetic sensor.

In some embodiments, the first sensor assembly can have an angular resolution, such that the turn-number being measured by the second sensor assembly allows the angular resolution to be substantially maintained throughout a number of turns of the shaft. The number of turns can be greater than two.

In some embodiments, the magnet can be directly coupled to the shaft so as to yield substantially nil mechanical backlash between the shaft and the magnet. The direct coupling of the magnet to the shaft can include a magnet mounting structure having a first side and a second side, with the first side being attached to an end of the shaft and the second side being attached to the magnet. The magnet can be configured to be bipolar and diametrally magnetized so as to yield variable orthogonal and parallel magnetic fluxes to the magnetic sensor.

In some embodiments, the magnetic sensor can include a plurality of Hall-effect sensors, a plurality of sine-cosine magneto-resistive (MR) sensors, a plurality of giant magnetic resistive (GMR) sensors, or an integrated vertical Hall sensor. In some embodiments, the magnetic sensor can include the plurality of Hall-effect sensors implemented in a quadrature Hall-effect sensor assembly. The quadrature Hall-effect sensor assembly can be configured to operate as a sine-cosine sensor, where the variations of the orthogonal and parallel magnetic fluxes at the quadrature Hall-effect sensor assembly are approximated as sine and cosine in quadrature. The quadrature Hall-effect sensor assembly can be configured calculate the angular position of the magnet by approximating an angular displacement of the magnet by a quantity $\arctan(\tan(\alpha))$, where $\alpha$ is a phase of the approximated sine and cosine in quadrature. The angular displacement being approximated by a ratio of $\sin(\alpha)$ and $\cos(\alpha)$ can allow measurement of the angular displacement to be stable against variations in amplitudes of measured magnetic fluxes.

In some embodiments, the non-magnetic sensor of the second sensor assembly can include an electrical sensor or an electromagnetic sensor such as an inductive sensor. In some embodiments, the non-magnetic sensor can include the electrical sensor. The electrical sensor can include a resistive element and a sliding contact configured to provide variable resistance representative of the turn-number of the shaft.

In some embodiments, the electrical sensor can include a wirewound resistive element having first and second ends, a wiper assembly that includes the sliding contact, with the wiper assembly being configured to allow the sliding contact to move along the wirewound resistive element as the shaft is turned, and a collector contact electrically connected to the sliding contact, such that the first and second ends of the wirewound resistive element and the collector contact form a potentiometer circuit. The electrical sensor can further include first and second contacts electrically connected to the first and second ends of the wirewound resistive element, and a collector terminal electrically connected to the collector contact. The electrical sensor can be configured to generate an output voltage representative of the turn-number of the shaft within a travel range of the shaft.

In some embodiments, the non-magnetic sensor can include the inductive sensor. The inductive sensor can include a metal target coupled to the shaft to allow longitudinal movement of the metal target relative to an inductive element when the shaft is rotated. The metal target and the inductive element can be configured to allow measurement of an inductive response that depends at least in part on a separation distance between the metal target and the inductive element.

In some embodiments, the inductive element can include a conductive coil. The conductive coil can be implemented as a winding of conductive trace on a substantially flat substrate. The winding can define a plane having a normal direction approximately parallel with the longitudinal axis.

In some embodiments, the inductive sensor can further include a target holder configured to hold the target relative to the shaft and the inductive element. The target holder can be configured to be thread-coupled to the shaft to effectuate the longitudinal movement. The target holder can be configured to be thread-coupled to a helical groove pattern defined on an interior surface of a housing wall to effectuate the longitudinal movement.

In some embodiments, the shaft can be configured to provide a clutch functionality. In some embodiments, the shaft can be configured without a clutch functionality.

In some embodiments, the first sensor assembly can be configured to provide an N-bit resolution to yield an angular resolution for the given turn of the shaft, and the second sensor assembly can be configured to provide an M-bit resolution sufficient to determine the turn-number of the shaft. The position sensing device can have an effective M+N bit resolution over a range of number of turns of the shaft.

In some implementations, the present disclosure relates to a method for sensing a position of a shaft having a longitudinal axis. The method includes measuring with a first sensor assembly an angular position of the shaft within a given turn by sensing a magnet that is coupled to the shaft. The method further includes measuring with a second sensor assembly a turn-number of the shaft. The method further includes combining the measured angular position of the shaft and the measured turn-number of the shaft. The second sensor assembly includes a non-magnetic sensor.

In some embodiments, the angular position and the turn-number can be measured independently. The independent measurements of the angular position and the turn-number can yield an angular resolution associated with the angular position measurement to be substantially maintained throughout a number of turns of the shaft. The number of turns can be greater than two. In some embodiments, the non-magnetic sensor can include an electrical sensor or an inductive sensor.

In some implementations, the present disclosure relates to a system for determining a state of a rotating object. The system includes a first sensor assembly having a magnet and a magnetic sensor. The magnet is coupled to the rotating object, and the magnetic sensor is positioned relative to the magnet such that the first sensor assembly allows measurement of an angular position of the magnet relative to the magnetic sensor so as to thereby allow determination of the corresponding angular position of the rotating object within a given turn of the rotating object. The system further includes a second sensor assembly coupled to the rotating object and configured to allow measurement of a turn-number of the rotating object. The second sensor assembly includes a non-magnetic sensor.

For purposes of summarizing the disclosure, certain aspects, advantages and novel features of the inventions have been described herein. It is to be understood that not necessarily all such advantages may be achieved in accordance with any particular embodiment of the invention. Thus, the invention may be embodied or carried out in a manner that achieves or optimizes one advantage or group of advantages as taught herein without necessarily achieving other advantages as may be taught or suggested herein.

BRIEF DESCRIPTION OF THE DRAWINGS

Figure 1 schematically shows a position sensing device that includes an angular position sensor and a rotation sensor.
Figure 2 shows a perspective view of an example embodiment of the device of Figure 1, where the angular position sensor can be implemented as a first sensor and the rotation sensor can be implemented as a second sensor.
Figure 3 shows a cutaway view of the example embodiment of Figure 2.
Figures 4A and 4B schematically depict side and axial views of an example of the angular position sensor of Figures 1-3.
Figures 5A-5D show examples of how the angular position sensor of Figures 4A and 4B can be configured to operate to yield an angular position of a rotating axis.
Figures 6A-6C show examples of how the rotation sensor can be configured to provide one or more features as described herein.
Figure 7 shows examples of outputs that can be obtained from the sensing device having one or more features as described herein.
Figures 8A-8C show that a position sensing device as described herein can have an electrical rotation sensor, a magnetic rotation sensor, and/or an electromagnetic rotation sensor.

Figure 9 shows an example of the magnetic rotation sensor of Figure 8B.

Figure 10 shows an example of the electromagnetic rotation sensor of Figure 8C.

Figure 11 shows a variation of the electromagnetic rotation sensor of Figure 10, where a rotatable shaft is provided with a clutch mechanism.

Figures 12A and 12B show examples of sensing elements that can be utilized for the electromagnetic rotation sensor of Figures 10 and 11.

DETAILED DESCRIPTION OF SOME EMBODIMENTS

The headings provided herein, if any, are for convenience only and do not necessarily affect the scope or meaning of the claimed invention.

Disclosed herein are example devices and methods related a high resolution position sensing device. As described herein, such a sensing device can be designed and implemented as a multi-turn sensing device having desirable functionalities such as reduced hysteresis. In some embodiments, such reduced hysteresis can be realized from, for example, reduced mechanical backlash effects associated with one or more components of position sensing devices.

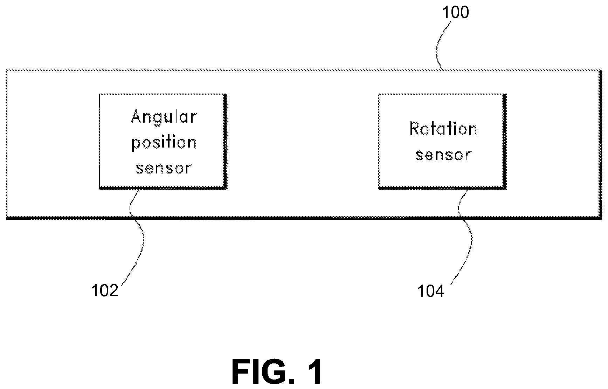

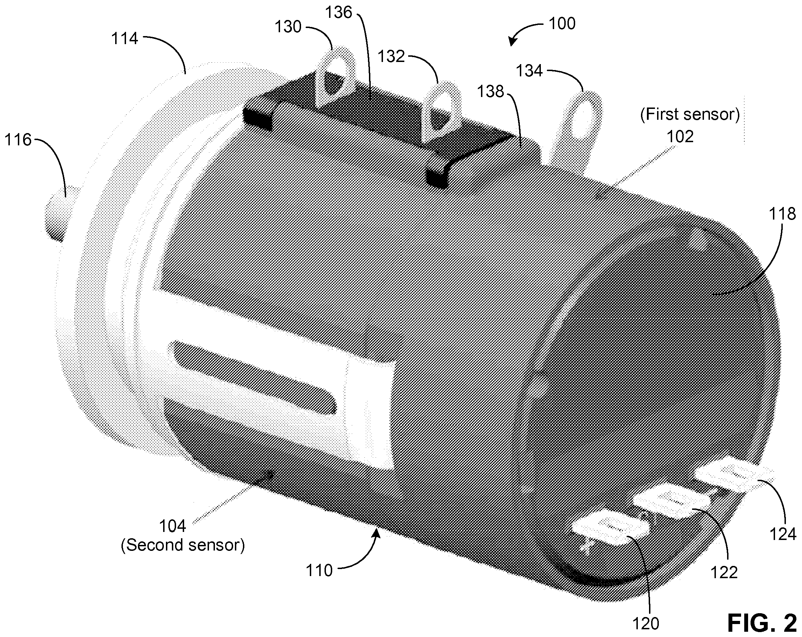

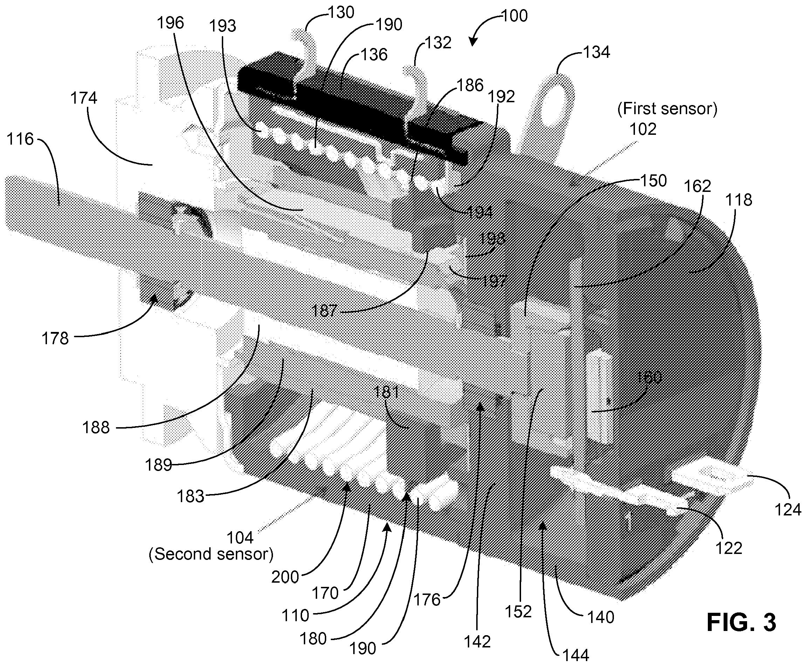

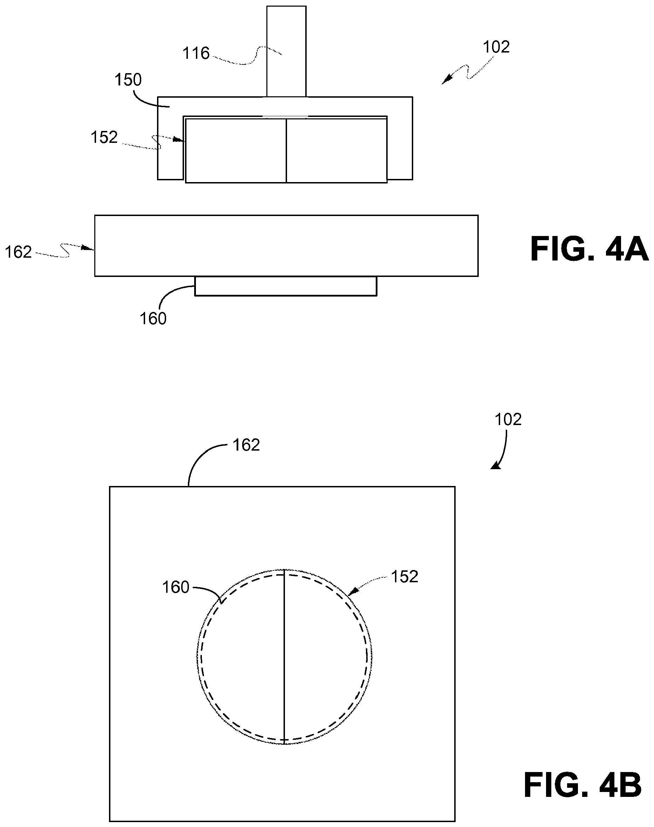

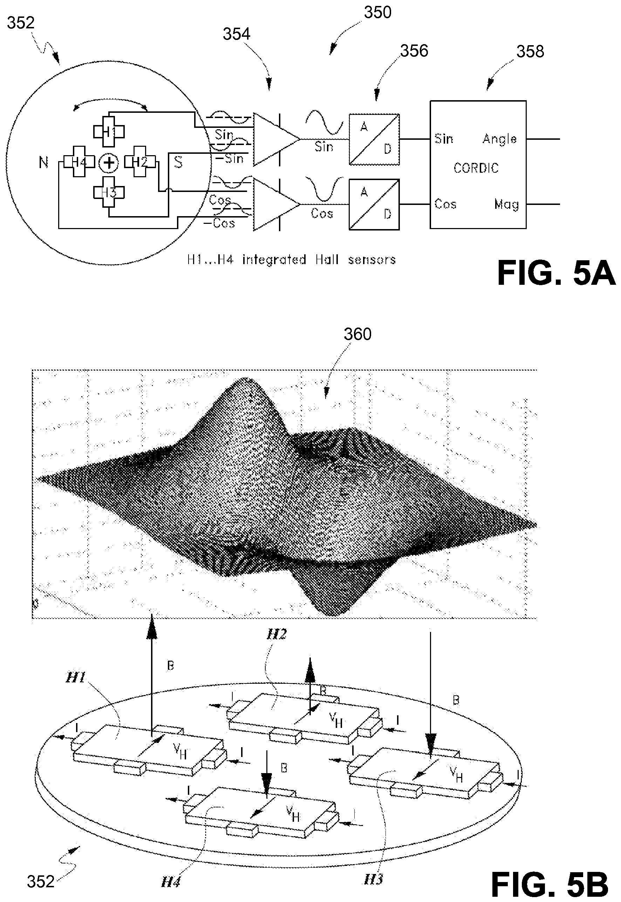

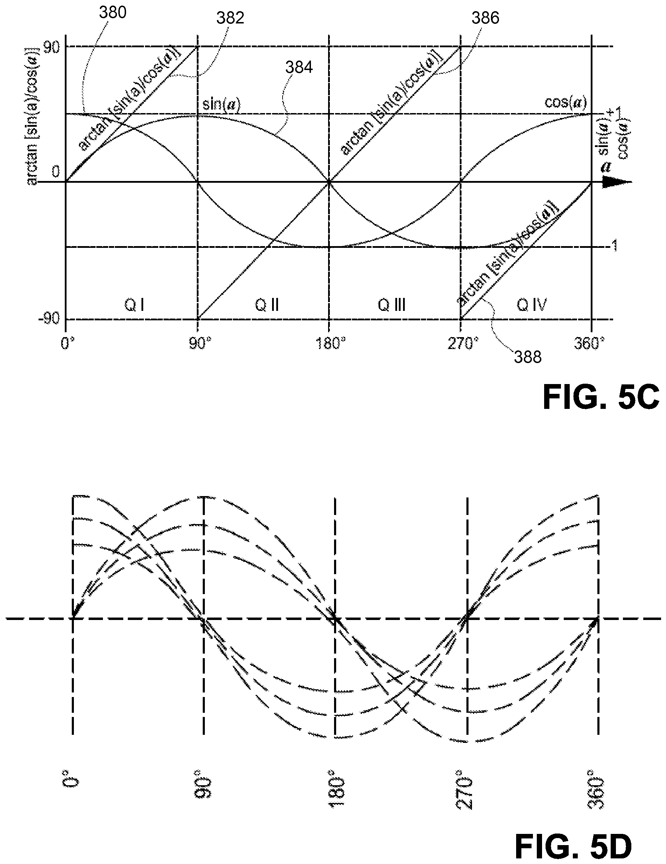

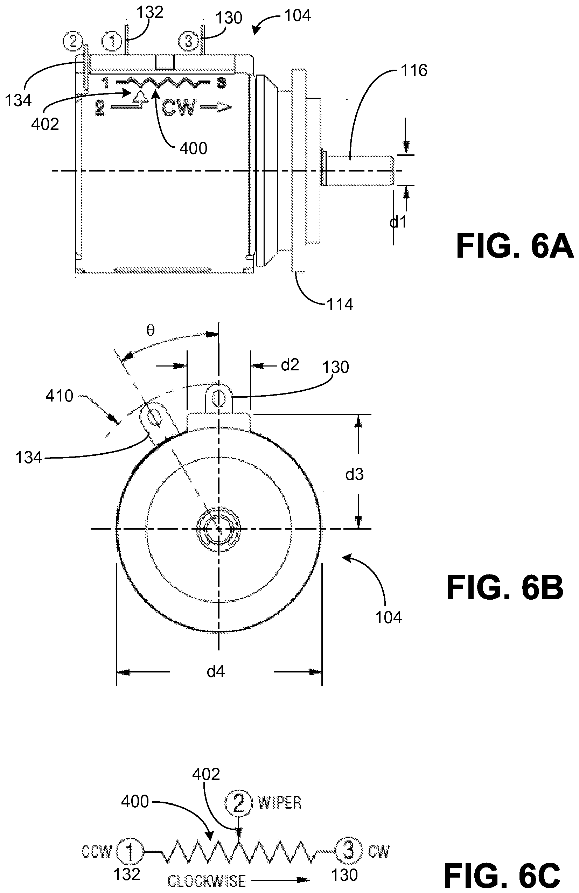

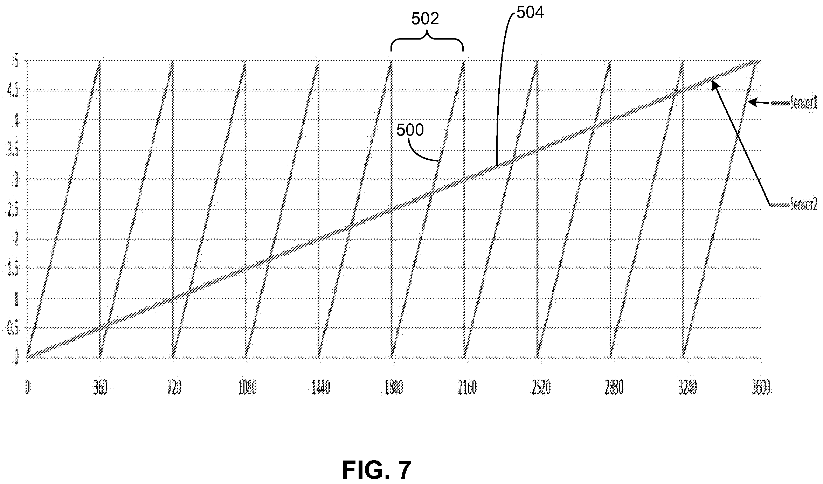

Figure 1 schematically shows that in some implementations, a position sensing device 100 can include an angular position sensor component 102 and a rotation sensor component 104. Figures 2 and 3 show examples of how such sensor components can be combined to yield, among others, a high resolution capability over a range of rotation that can include multiple turns. Figures 4 and 5 show examples of how the angular position sensor 102 can be implemented. Figures 6A-6C show examples of how the rotation sensor 104 can be implemented. Figure 7 shows examples of outputs that can be obtained from the sensing device 100 having one or more features as described herein.

Figure 2 shows an example of a position sensing device 100 having a first sensor 102 (also referred to herein as Sensor-1) and a second sensor 104 (also referred to herein as Sensor-2). The first sensor 102 can be the angular position sensor 102 of Figure 1. In some embodiments, the first sensor 102 can be configured to yield an angular position of a rotatable shaft 116 in a given turn. The second sensor 104 can be the rotation sensor 104 of Figure 1. In some embodiments, the second sensor 104 can be configured to yield a number of turns made by the rotatable shaft 116. Because the two measurements can be independent of each other, combining of such measurements can benefit from high resolution associated with the first sensor 102 extended over multiple turns. Further, and as described herein, such high resolution performance over multiple turns can be implemented with reduced or negligible hysteresis effects.

As shown in Figure 2, the position sensing device 100 can include a housing 110 configured to house both of the first and second sensors 102, 104. The housing 110 can include one or more structures configured to support the first and second sensors 102, 104, the rotatable shaft 116, and/or other associated components.

Figure 2 also shows that the housing 110 can be coupled to a mounting structure dimensioned to facilitate different mounting options. For example, a flange 114 can be dimensioned to allow panel mounting of the position sensing device 100.

In some embodiments, the first sensor 102 can be a non-contacting magnetic sensor. Examples associated with such a sensor are described herein in greater detail in reference to Figures 4 and 5. As shown in Figure 2, such a non-contacting magnetic sensor can include terminals 120, 122 and 124 for providing input power and for outputting a signal representative of an angular position of the shaft 116. Terminal 120 can be a power supply terminal for receiving a supply voltage (e.g., 5VDC), and terminal 124 can be a ground terminal. Terminal 122 can be an output terminal for outputting signals representative of the angular positions of the shaft 116. Examples of such output signals are described herein in greater detail.

In some embodiments, the second sensor 104 can be a precision potentiometer device having a design similar to commercially available devices (e.g., Bourns 3541H or 3549H). In some embodiments, such a potentiometer device can include advantageous features, including, for example, a hybrid resistive wirewound element with conductive plastic coating. Such a resistive element exhibits the stability characteristics of a wirewound element with the long operational life of a conductive plastic element. The advantageous features can also include excellent backlash performance. For example, mechanical backlash of less than 1 degree can be expected. In some embodiments, such a feature can be facilitated by a wiper element being coupled directly to the shaft. Examples concerning such coupling are described in greater detail in reference to Figure 3.

Figure 2 shows that in some embodiments, electrical terminals associated with the potentiometer of the second sensor 104 can be provided along the cylindrical wall of the housing 110. For example, the two ends of the resistive element (not shown in Figure 2) can be electrically connected to first and second terminals 130 and 132, and the wiper (not shown in Figure 2) can be electrically connect to a collector terminal 134. Examples concerning such terminals are described herein in greater detail.

Figure 3 shows a cutaway view of the example position sensing device 100 of Figure 2. More particularly, examples of how the first and second sensors 102, 104 can be configured and arranged relative to the shaft 116 are shown.

The shaft 116 is shown to be rotatably secured to the housing by first and second bushings 176, 178. Each of such bushings can include a bearing surface (e.g., brass and bronze) for improved wear characteristics under different loads (e.g., side load). In the example configuration shown in Figure 3, the first bushing 176 is shown to be molded into a partition 142 that separates the first and second sensors 102, 104. The second bushing 178 is shown to be molded into a front lid structure 174. Such bushing configurations can provide advantageous features such as improved mechanical stability, as well as improved manufacturing processes.

The shaft 116, supported by the bushings 176, 178, is shown to have its end coupled to a magnet mounting structure 150. The magnet mounting structure 150 is shown to be dimensioned to have a magnet 152 mounted thereon. In some embodiments, such a coupling configuration can yield a substantially direct mechanical coupling of the magnet 152 and the shaft 116. In such a direct-coupled configuration, rotation of the shaft 116 can be transferred substantially directly to the magnet 152, so as to reduce or eliminate mechanical backlash associated with the first sensor 102.

In the example of Figure 3, the magnet 152 and a sensing assembly 162 are parts of the first sensor 102. Examples of how the rotation of the magnet 152 (and thus the rotation of the shaft) can be sensed by the sensing assembly 162 are described herein in greater detail in reference to Figures 4 and 5.

The sensing assembly 162 is shown to be mounted to the inner side of and end cap 118 of the housing 110. An integrated-circuit (IC) sensor 160 for the first sensor 102 is shown to be part of the sensing assembly 162; and the end cap 118 can be dimensioned appropriately to accommodate the IC sensor 160. The end cap 118 is also shown to support the electrical terminals 120 (shown in Figure 2), 122, 124 associated with the first sensor 102.

In the example of Figure 3, the end cap 118, the partition 142, and cylindrical wall 140 therebetween are shown to define a first space 144 dimensioned to house the various parts of the first sensor 102. As described herein, the partition 142 can be configured to support the bushing 176.

As further shown in Figure 3, various parts associated with the second sensor 104 can be positioned between the partition 142 and the front lid structure 174. In the example, a cylindrical wall 170 between the partition 142 and the front lid structure 174 is shown to define recessed features 200 dimensioned to receive and support an outer portion of a wirewound element 190. Accordingly, the recessed features 200 can function as a supporting structure for the wirewound element 190. In some embodiments, such a supporting structure can be dimensioned to provide more uniform spacing so as to improve the position resolution capability. In some embodiments, the supporting structure 200 for the wirewound element 190 can be configured to allow the wirewound element 190 to be bonded thereto, to thereby facilitate, for example, the foregoing uniform spacing feature in a secure manner.

In some embodiments, the cylindrical wall 170 can be implemented as a single piece molded from materials such as plastic, with the supporting structure 200 (for the wirewound element 190) defined on the inner surface. Other configurations of the cylindrical wall 170 and/or the supporting structure 200 can also be implemented.

For the example configuration of the wirewound element 190, its first end 193 on the side of the front lid structure 174 is shown to be electrically connected to the first terminal 130. Similarly, the second end 194 of the wirewound element 190 on the side of the partition 142 is shown to be electrically connected to the second terminal 132.

In some embodiments, the electrical connection for each of the first and second terminals 130, 132 can include, for example, stamped metal held in place by a molded structure 136. The molded structure 136 is in turn shown to be secured to the cylindrical wall 170 by appropriate mounting features.

In Figure 3, the electrical connection for the second terminal 132 is shown to include a contact feature 192 that engages the wirewound element 190 at or near the second end 194. A connecting portion that electrically connects the second terminal 132 with its corresponding contact feature 192 is shown to be shaped (e.g., two 90-degree bends) to yield a desirable position of the second terminal 132, and/or to provide sufficient encapsulation by the molded structure 136. The electrical connection for the first terminal 130 can also be configured in a similar manner with respect to the first end 193 of the wirewound element 190.

In some embodiments, the wirewound element 190 can be configured to function as a screw thread for translating rotational motion of a wiper into an axial displacement. Such a configuration can allow the wiper to cover a plurality of turns of the wirewound element 190.

In the example shown in Figure 3, a wiper assembly 180 can be configured to provide the foregoing functionality over a plurality of turns (e.g., multiple turns) of the wirewound element 190. The wiper assembly 180 can be a ring shaped object with an engagement feature 186 that extends out radially and engages the wirewound element 190 so as to form a thread-to-thread type engagement between the wiper assembly 180 and the wirewound element 190. In some embodiments, the wiper assembly 180 can be formed from an electrically insulating material, and various electrical contact features can be formed thereon as described herein.

In some embodiments, the wiper assembly 180 can be configured so as to form a sliding electrical contact with a localized portion of the wirewound element 190. For example, a sliding contact feature can be formed on one side (e.g., along the axial direction) of the engagement feature 186 so as to allow the contact feature to be in electrical contact with the corresponding localized portion of the wirewound element 190.

A contact feature 187 can be provided on an inner side of the wiper assembly 180; and the contact feature 187 can be configured to engage a collector contact 196. An electrical connection between the sliding contact portion of the engagement feature 186 and the contact feature 187 can be provided, so as to electrically connect the sliding contact portion of the engagement feature 186 with the collector contact 196. The collector contact 196 is shown to be electrically connected to the collector terminal 134, such that the sliding contact portion of the engagement feature 186, at various locations along the wirewound element 190, is in electrical contact with the collector terminal 134.

In the example configuration shown in Figure 3, rotational motion of the shaft 116 can be transferred to the wiper assembly 180 as follows. An inner sleeve 188 is shown to be provided around a portion of the shaft 116 between the partition 142 and the front lid structure 174, such that the inner sleeve 188 rotates with the shaft 116. An outer sleeve 189 is shown to be provided around the inner sleeve 188, such that the outer sleeve rotates with the inner sleeve 188 (and therefore with the shaft 116). Joints between the shaft 116 and the inner sleeve 188 and between the inner sleeve 188 and the outer sleeve 189 can be implemented in a number of ways, including, for example, press fitting, adhesive, etc. It will also be understood that, although described in the context of two example sleeves, the region between the shaft 116 and the collector contact 196 can be formed with lesser or greater number of structures. It will also be understood that in some embodiments, the shaft itself can be dimensioned appropriately to provide some or all of the spacing and guiding functionalities associated with the sleeve(s).

In the example shown in Figure 3, the outer sleeve 189 can include an outer surface on which the collector contact 196 can be mounted or formed. The outer sleeve 189 can further include a guide slot 183 that extends axially along the outer portion of the outer sleeve 189. The guide slot 183 can be dimensioned to receive a corresponding guide tab 181 formed on the inner side of the wiper assembly 180.

The guide tab 181 being captured within the guide slot 183 results in the wiper assembly 180 being forced to rotate with the shaft 116. As described herein, such a rotation of the wiper assembly 180 results in the axial motion of wiper assembly 180 due to the example thread-to-thread interaction with the wirewound element 190. In some embodiments, the mating of the guide tab 181 and the guide slot 183 can be configured to provide desirable sliding motion of the tab 181 in the slot 183 as the shaft 116 is turned, while reducing mechanical backlash effects.

As the wiper assembly 180 moves axially in the foregoing example manner, its contact feature 187 remains electrically connected to the collector contact 196. In some embodiments, the collector contact 196 can be configured to rotate with the shaft 116 so as to allow such continuous sliding electrical connection with the contact feature 187. The collector contact 196 is further shown to include a contact feature 197 that engages and provides electrical connection with a contact ring 198 as the collector contact 196 rotates with the shaft 116. The contact ring 198 can be electrically connected to the collector terminal 134, thereby forming an electrical connection between the sliding contact portion of the engagement feature 186 along a given location of the wirewound element 190 and the collector terminal 134.

Figures 4A and 4B schematically depict isolated side and axial views of an example configuration of the magnet 152 described herein in reference to Figure 3 and its non-contacting position relative to a magnetic sensor 160 (e.g., part of a sensing assembly 162, also shown in Figure 3). The magnet 152 is shown to be mounted to the shaft 116 through the magnet mounting structure 150.

In some embodiments, the magnet 152 can be configured to be bipolar and diametrally magnetized so as to yield variable orthogonal and parallel magnetic fluxes to the magnetic sensor 160. In some embodiments, such a magnet can be separated from the magnetic sensor by, for example, approximately 1 mm $\pm 0.5$ mm working distance, and the magnetic sensor 160 can be configured to read the angular position of the magnet 152 with varying resolutions, including, for example, 10 to 16 bit resolution. Other separation distances and/or other resolution capabilities can also be utilized.

Figures 5A-5D show examples of how such magnetic flux can be detected so as to determine the angular position of the magnet 152 of Figures 4A and 4B (and thus the shaft 116) relative to the magnetic sensor 160. In some implementations, the magnetic sensor 160 can include a quadrature Hall-effect sensor assembly 352 having Hall-effect sensors indicated as H1-H4. Such Hall-effect sensors may or may not be formed as integrated sensors. Although the magnetic sensor 160 is described in the context of Hall-effect sensors, it will be understood that other types of sensors can also be implemented. For example, sine-cosine magneto-resistive (MR) sensors, giant magnetic resistive (GMR) sensors, or integrated vertical Hall sensor can be utilized (e.g., in a bridge configuration).

Figure 5A shows that in some implementations, the magnetic sensor assembly 352 can be configured to operate as a sine-cosine sensor, where the variations of the orthogonal and parallel magnetic fluxes (e.g., 360 in Figure 5B) at the magnetic sensor assembly 352 can be approximated as sine and cosine in quadrature. Such outputs of the Hall-effect sensors can be processed by an analog interface 350 configured to provide functionalities such as amplification and conditioning 354 and conversion to digital data 356 so as to yield one or more outputs 358. In some embodiments, the back-end portion of the foregoing readout arrangement can be configured so as to provide programmable interface with A/D, D/A and serial communication capabilities.

In the example shown in Figures 5A and 5B, the Hall-effect sensors H1-H4 are depicted as outputting +sine, +cosine, -sine, -cosine signals, respectively. Such signals can be based on Hall voltages ($V_H$) resulting from interactions of the currents (I) with the magnetic fields (B). Accordingly, sensing of such signals can yield flux values H1-H4 that can be represented as follows:

$$H1 = \hat{a} \cdot \sin(\alpha) \qquad (1a)$$

$$H2 = \hat{a} \cdot \cos(\alpha) = \hat{a} \cdot \sin(\alpha + 90^{o}) \qquad (1b)$$

$$H3 = -\hat{a} \cdot \sin(\alpha) = \hat{a} \cdot \sin(\alpha + 180^{o}) \qquad (1c)$$

$$H4 = -\hat{a} \cdot \cos(\alpha) = \hat{a} \cdot \sin(\alpha + 270^{o}), \qquad (1d)$$

such that:

$$H1 - H3 = 2\hat{a} \cdot \sin(\alpha) \qquad (2a)$$

$$H2 - H4 = 2\hat{a} \cdot \cos(\alpha). \qquad (2b)$$

Upon differential readouts, the signals can be approximated as sine and cosine signals. Such signals can be used to calculate an angular displacement (A) of the magnet relative to the magnet sensor. For example, the quantity A can be estimated as follows:

$$(H1-H3)/(H2-H4) = (2\hat{a} \cdot \sin(\alpha))/(2\hat{a} \cdot \cos(\alpha)) = \tan(\alpha) \qquad (3a)$$

$$A \approx \arctan((H1-H3)/(H2-H4)) = \arctan(\tan(\alpha)) = \alpha. \qquad (3b)$$

Thus, as shown in Figure 5C, readouts of sine and cosine signals (384, 380) in quadrature can yield an angular displacement (A) of the magnet that can be estimated as being linear with the phase angle $\alpha$. Such linear estimation is depicted by sloped lines 382, 386 and 388.

In some situations, the Hall sensors' amplitudes may change due to effects such as mechanical misalignment, internal magnetic field variation, temperature variation, and/or external magnetic fields. However, as shown in Figure 5D, such effects will likely affect the signals amplitudes and not the sin/cos ratios. Thus, the foregoing example of estimating the angular displacement by the sin/cos ratio or the phase angle $\alpha$ can yield a stable sensor.

Figures 6A-6C show some additional features that can be implemented for the second sensor 104 as described herein. Figures 6A and 6C show an example of how potentiometer functionality can be obtained with the second sensor 104. As described herein, a wirewound element such as a hybrid resistive wirewound element with conductive plastic coating, can be represented as a resistive element 400 between terminals indicates as "1" and "3" (132 and 130, respectively). A sliding contact 402 (186 in Figure 3), which is connected to a terminal indicated as "2" (134) can be in electrical contact along the resistive element 400. Configured in the foregoing manner, resistance between the terminal 132 and the terminal 134 can be represented as R1, and resistance between the terminal 134 and the terminal 130 can be represented as R2. The values of R1 and R2 can vary in an inversely proportional manner, depending on where the sliding contact 402 is located, with the sum of R1 and R2 being approximately the total resistance of the resistive element 400 between the terminals 132, 130. The terminal 134 can function as a collector terminal, and the resulting potentiometer circuit can be utilized in a number of ways, including, for example, as a voltage divider. A voltage associated with such a voltage divider circuit can allow determination of how much the shaft 116 has turned clockwise or counterclockwise. Based on such information, turn-number information can be obtained. Examples of such are described herein in greater detail.

Figures 6A and 6B shows that the second sensor 104 can be configured in a number of ways to accommodate different applications. For example, dimension (e.g., diameter d1) of the shaft 116 can be selected. In another example, mounting options such as panel mounting (with a flange 114) can be implemented. In yet another example, various other dimensions such as the housing diameter (d4), dimensions of the terminal mounting structure (d2, d3), and sizes and orientations of the terminals (410, angular offset 0 between the collector and end terminals) can be selected appropriately. It is noted that the foregoing example configurations of the second sensor 104 can remain generally unchanged when the first sensor 102 (not shown in Figures 6A and 6B) is positioned on the back side of the shaft 116.

Figure 7 shows examples of output signals that can be obtained from the position sensing device 100 as described herein. A signal trace 500 represents a cyclic output from the first sensor 102, and a signal trace 504 represents an output from the second sensor 104. Although both are depicted in the example context of 5V operating ranges, it will be understood that other output voltage ranges can also be implemented. It will also be understood that the output voltage ranges of the first sensor 102 and the second sensor 104 may or may not be the same. Also, although the second sensor's operating range in described in the example context of 10 turns (3,600 degrees), it will be understood that other turn ranges can also be implemented.

As described herein and further shown in Figure 7, the first sensor 102 can be configured as an angular position sensor for a given turn. Accordingly, ten such angular position traces are shown, corresponding to the ten turns. For a given turn, such as the sixth turn (indicated as 502), the output voltage of the first sensor can vary approximately linearly from zero to 5V over 360 degrees of that turn.

As also described herein and further shown in Figure 7, the second sensor 104 can be configured as a rotation sensor 104 for determining the turn number within its travel range. The signal trace 504 can represent, for example, the rotational position of the shaft between, for example, its full counterclockwise position (e.g., 0V output) and full clockwise position after 10 rotations (e.g., 5V output). Because of the example configuration of the second sensor 104 as described herein, the relationship between the output voltage (resulting from the potentiometer circuit) and the rotational position of the shaft can be approximately linear.

It is noted that because two independent sensors (102, 104) are being utilized, absolute position of the shaft can be determined with very high resolution, even if the resolutions of either or both of the two sensors are not that high. For example, suppose that the angular position sensor 102 yields an angular displacement value A as described above in a range of 0 to 360 degrees. Further, suppose that such an angular displacement value A can be measured with a resolution of, for example, 14 bits. With such a configuration, fine resolution can be provided by the angular position sensor 102 for any given turn, and the rotation sensor 104 can be configured with relatively low resolution (e.g., 4 bits) to simply determine the number of turns made by the shaft.

In the foregoing example, the per-angle resolution provided by the angular position sensor 102 can be maintained throughout a full range of rotational motion, which in some situations can involve multiple turns of the shaft. Accordingly, the rotation sensor 104 operating as a turn counter, in combination with the high resolution capability of the angular position sensor 102, can yield a high resolution position sensing device over a wide range of rotational motion.

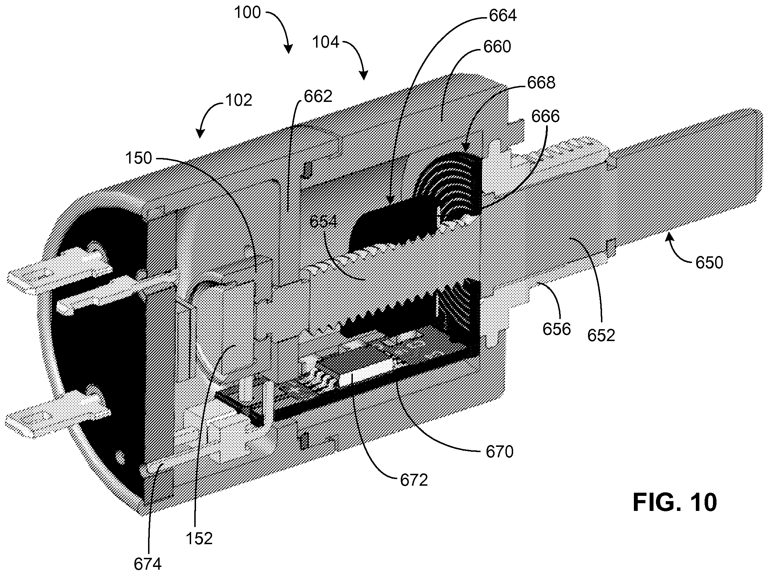

In the foregoing example, the angular position sensor 102 can have a 14-bit resolution for a given turn, and the rotation sensor 104 can have a 4-bit resolution which is sufficient to determine the number of turns from 0 to 15. Within each turn, the angular position sensor 102 can provide an angular resolution of about 0.02 degree ($360/(2^{14})$). Because the rotation sensor 104 is providing the turn number information, angular position in any of the turns within the range of 0 to 15 can benefit from the 0.02 degree resolution. Accordingly, the angular resolution for the entire range of motion remains at approximately 0.02 degree, effectively yielding an 18-bit angular resolution over a range of 0 to 15 turns, inclusive. In the context of the 10-turn example of Figure 7, 10 turns with 0.02 degree resolution essentially yields 180,000 micro-steps (3,600/0.02), which is equivalent to about 17.5-bit resolution.

In another example, suppose that the angular position sensor 102 has a 12-bit resolution, and the rotation sensor 104 has a 3.25-bit resolution for the 10-turn range. Then, the angular resolution for the entire range of motion can remain at about 0.0879 ($360/2^{12}$), to yield 40960 micro-steps, which is equivalent to approximately 15.25-bit resolution.

Aside from the foregoing high resolution performance, there are a number of other advantageous features that can be realized by the independent turn-number determination (by the rotation sensor 104) functionality. For example, even though the rotation sensor has high linearity (e.g., 0.25%), its role as a turn counter can remove its contribution to linearity. Thus, if the angular position sensor 102 has a linearity of, for example, 0.5% for a given turn, the overall linearity over the example 10 turns can be estimated as 0.5%/10, or 0.05%.

In another example, the overall hysteresis performance of the position sensing device 100 can also benefit from the independent turn-number determination (by the rotation sensor 104) functionality. Although the examples of the rotation sensor (e.g., Bourns 3541H or 3549H) are described herein as having mechanical backlash performance of less than 1 degree, such backlash is not necessarily manifested when the rotation sensor 104 is utilized as a low-resolution turn counter. Accordingly, any hysteresis for the position sensing device 100 is generally contributed by the angular position sensor 102. In some embodiments, the magnet (e.g., 152 in Figures 3 and 4) being directly coupled to the shaft 116 can result in the angular position sensor 102 having a hysteresis equivalent to approximately 0.2 degree, which in many applications is negligible.

In yet another example, life expectancy of the position sensing device 100 can also benefit from the independent turn-number determination (by the rotation sensor 104) functionality. A life expectation of, for example, 20-million shaft revolutions (which is about four times the life expectancy of the a rotation sensor used in high resolution applications) can be realized, since output degradation is not as critical due to the low resolution use in some multi-turn applications.

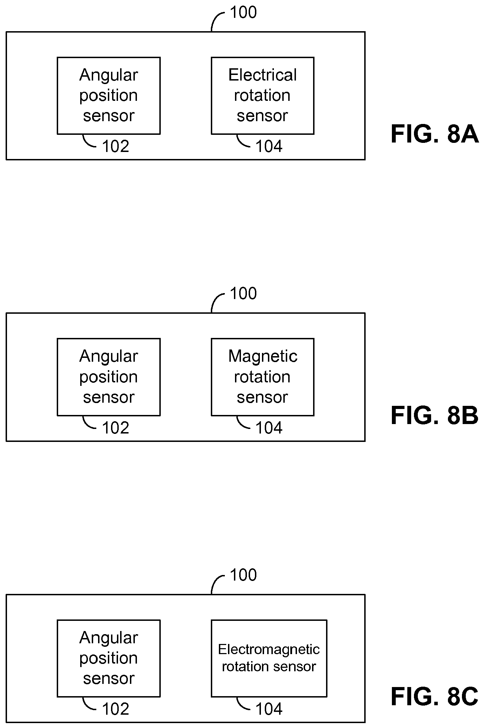

It is noted that various examples described in reference to Figures 2, 3 and 6A-6C relate to an example rotation sensor 104 of Figure 1. More particularly, and as depicted in Figure 8A, such a rotation sensor is an electrical rotation sensor based on, for example, resistance-related measurements.

It is also noted that the rotation sensor 104 of Figure 1 can also be based on other types of measurements. Figures 8B and 8C show that in some embodiments, the rotation sensor 104 of Figure 1 can be a magnetic rotation sensor (104 in Figure 8B) or an electromagnetic rotation sensor (104 in Figure 8C). Examples of such magnetic and electromagnetic rotation sensors are described herein in greater detail. In each of the position sensing devices 100 of Figures 8B and 8C, the angular position sensor 102 can be similar to the example described herein in reference to Figures 2-5 and 7. Accordingly, the position sensing devices of Figures 8A-8C can provide various desirable functionalities as described herein.

For the purpose of description herein, an electromagnetic rotation sensor may or may not include a permanent magnet. In various examples described herein with respect to Figures 10-12, electromagnetic rotation sensors do not include a permanent magnet. As described herein, such electromagnetic rotation sensors can be configured as inductive sensors.

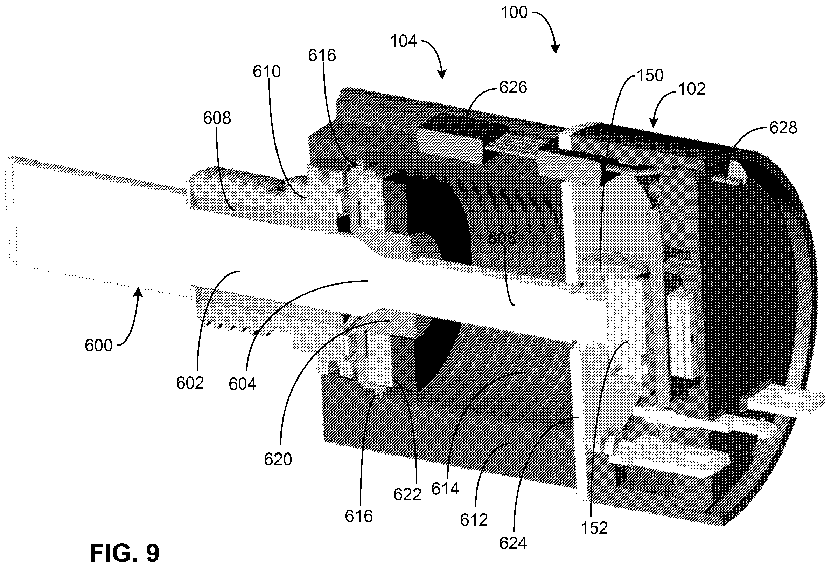

Figure 9 shows an example of a position sensing device 100 having an angular position sensor 102 and a magnetic rotation sensor 104. In the example of Figure 9, the angular position sensor 102 can be similar to the example described herein in reference to Figures 2-5 and 7.

In the example of Figure 9, a rotatable shaft 600 is shown to include a first section 602 that is supported by a bushing 608 which is in turn mounted within a mounting cap assembly 610. The rotatable shaft 600 is shown to further include a second section 606 that extends from the first section 602 to a magnet mounting structure 150 of the angular position sensor 102. The magnet mounting structure 150 can be configured to hold a magnet 152 as described herein.

The second section 606 of the rotatable shaft 600 can be coupled to a magnet holder 620 such that the magnet holder 620 is forced to rotate with the second section 606, and also allowing the magnet holder 620 to slide longitudinally along the second section 606. The magnet holder 620 is further shown to include a thread feature 616 at its outer periphery, and such a thread feature can be dimensioned to mate with a helical groove 614 defined on the inner surface of a housing 612 to thereby form a thread engagement between the magnet holder 620 and the helical groove 614. Accordingly, rotation of the rotatable shaft 600 results in the thread feature 616 of the magnet holder 620 engaging the helical groove 614 and thereby causing the magnet holder 620 to slide longitudinally along the second section 606.

The magnet holder 620 is further shown to be dimensioned to hold a ring magnet 622. Such a magnet can have cylindrical symmetry about the longitudinal axis of rotation of the rotatable shaft 600, and have poles along such a longitudinal axis. Accordingly, the ring magnet 622 can move longitudinally relative to the second section 606 as the rotatable shaft 600 rotates.

In the example of Figure 9, the second section 606 of the rotatable shaft 600 can have a smaller lateral dimension than the first section 602. Such a transition in lateral dimension can yield a tapered portion 604, and the location of such a tapered portion can be selected to limit travel of the magnet holder 620.

In the example of Figure 9, a magnetic sensor 626 is shown to be provided at a portion of the housing 612 so as to detect one or more components of a magnetic field generated by the magnet 622. The magnetic sensor 626 can be positioned along a longitudinal direction at or near, for example, a mid-point of the longitudinal travel range of the magnet 622. Electrical connections to and from the magnetic sensor 626 can be facilitated by a plurality of terminals 628 positioned on the endcap of the angular position sensor 102.

In some embodiments, magnetic sensor 626 can be configured to determine the turn number of the rotatable shaft 600 by measuring the longitudinal position of the magnet 622. Such a determination can be achieved by, for example, calibrating the response of the magnetic sensor 626 with turn numbers. In some embodiments, and as described herein, measurements provided by the magnetic sensor 626 does not need to have high-resolution performance if it is being utilized to determine such turn numbers. In some embodiments, such turn numbers can include multiple turns of the rotatable shaft 600.

In some embodiments, a partition wall 624 can be provided to partition the angular position sensor 102 and the magnetic rotation sensor 104. Such a partition wall can include magnetic shielding material to prevent or reduce interference in operation between magnetic fields associated with the two sensors 102 and 104.

Figure 10 shows an example of a position sensing device 100 having an angular position sensor 102 and an electromagnetic rotation sensor 104. In the example of Figure 10, the angular position sensor 102 can be similar to the example described herein in reference to Figures 2-5 and 7.

In the example of Figure 10, a rotatable shaft 650 is shown to include a first section 652 that is supported by a mounting cap assembly 656. The rotatable shaft 650 is shown to further include a second section 654 that extends from the first section 652 to a magnet mounting structure 150 of the angular position sensor 102. The magnet mounting structure 150 can be configured to hold a magnet 152 as described herein.

The second section 654 of the rotatable shaft 650 can be thread-coupled with a target holder 664 such that the target holder 664 moves longitudinally when the shaft 650 rotates. The target holder 664 can be dimensioned to hold a metal target 666 which, in the example of Figure 10, can have a washer-shaped structure. Accordingly, the metal target 666 can move longitudinally as the shaft 650 rotates.

In the example of Figure 10, a coil assembly 668 is shown to be provided at or near one longitudinal end of the second section 654 of the rotatable shaft 650. Such a coil assembly can include, for example, a winding of metal trace on a substrate layer. The winding can include terminals so as to function as an inductor. As described herein, an AC signal provided to such an inductor can result in a detectable change in impedance due to inductive coupling with Eddy currents established on the metal target 666. Such a change in impedance depends on the distance between the metal target 666 and the winding of metal trace. Accordingly, the longitudinal position of the metal target 666 can be measured. Further, turn number of the rotatable shaft 650 can be obtained based on calibration of such measurement.

In the example of Figure 10, a circuit assembly 670 is shown to be provided on an interior portion of a housing wall 660. Such a circuit assembly can include an integrated circuit 672 configured to, for example, process the foregoing determination of the turn number based on the measured impedance change in the winding. The circuit assembly can also be configured to provide the AC signal to the winding. Electrical connections to and from the circuit assembly 670 can be facilitated by a plurality of terminals 674 positioned on the endcap of the angular position sensor 102.

In some embodiments, and as described herein, measurements provided by the foregoing inductive sensor of Figure 10 does not need to have high-resolution performance if it is being utilized to determine such turn numbers. In some embodiments, such turn numbers can include multiple turns of the rotatable shaft 650.

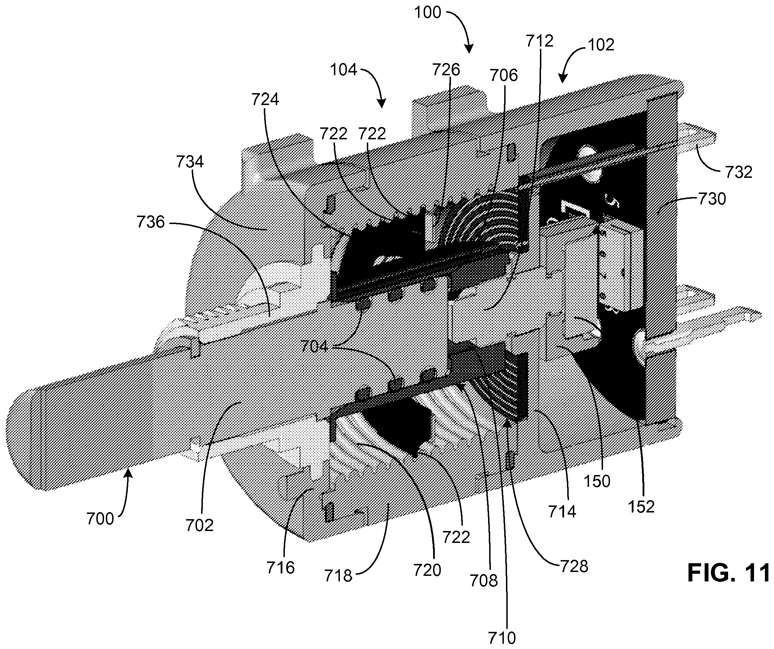

Figure 11 shows an example of a position sensing device 100 having an angular position sensor 102 and an electromagnetic rotation sensor 104. In the example of Figure 10, the angular position sensor 102 can be similar to the example described herein in reference to Figures 2-5 and 7. The electromagnetic rotation sensor 104 can be based in inductive coupling similar to the example of Figure 10; however, mechanical implementations of rotatable shaft and rotation-to-translation are different.

More particularly, in the example of Figure 11, a rotatable shaft 700 can be configured to provide a clutch functionality. The rotatable shaft 700 is shown to include a first section 702 that is supported by a mounting cap assembly 736. The rotatable shaft 700 is shown to be coupled to a second section 712 through a coupling member 708 which can include a first opening 706 dimensioned to receive the first section 702. The coupling member 708 can further include a second opening 710 dimensioned to receive one end of the second section 712. The other end of the second section 712 is shown to extend to a magnet mounting structure 150 of the angular position sensor 102. The magnet mounting structure 150 can be configured to hold a magnet 152 as described herein.

In the example of Figure 11, a portion of the first section 702 which goes inside the first opening 706 can include one or more grooves for corresponding o-ring(s) to thereby allow the first section 702 to be held securely within the first opening of the coupling member 708. A portion of the second section 712 which goes inside the second opening 710 can include a dimension that allows, for example, a friction fit between the second section 712 and the second opening 710. Such a friction fit can be configured to allow one part to slip rotationally relative to the other under certain conditions. For example, if the rotatable shaft 700 is attempted to be turned beyond the travel range of a longitudinally moving portion (e.g., a target holder 726), such a slip can occur in a clutch manner to inhibit such a motion.

In the example of Figure 11, the coupling member 708 can be coupled to a target holder 724 such that the target holder 724 is forced to rotate with the coupling member 708, and also allowing the target holder 724 to slide longitudinally along the coupling member 708. The target holder 724 is further shown to include a thread feature 722 at its outer periphery, and such a thread feature can be dimensioned to mate with a helical groove 720 defined on the inner surface of a housing 718 to thereby form a thread engagement between the target holder 724 and the helical groove 720. Accordingly, rotation of the rotatable shaft 700 results in the thread feature 722 of the target holder 724 engaging the helical groove 720 and thereby causing the target holder 724 to slide longitudinally along the coupling member 708.

The target holder 724 can be dimensioned to hold a metal target 726 which, in the example of Figure 11, can have a washer-shaped structure dimensioned to fit around the coupling member 708. Accordingly, the metal target 726 can move longitudinally with the target holder 724 as the shaft 700 rotates.

In the example of Figure 11, a coil assembly 728 is shown to be provided on a partition wall 714 that generally partitions the angular position sensor 102 and the electromagnetic rotation sensor 104. Such a coil assembly can include, for example, a winding of metal trace on a substrate layer. The winding can include terminals so as to function as an inductor. As described herein, an AC signal provided to such an inductor can result in a detectable change in impedance due to inductive coupling with Eddy currents established on the metal target 726. Such a change in impedance depends on the distance between the metal target 726 and the winding of metal trace. Accordingly, the longitudinal position of the metal target 726 can be measured. Further, turn number of the rotatable shaft 700 can be obtained based on calibration of such measurement.

In the example of Figure 11, a circuit assembly for the operation of the foregoing inductive measurement may or may not reside within the position sensing device 100. For example, conductors can provide electrical connections between the winding and a plurality of terminals 732; and processing of measurements can be performed external to the position sensing device 100. In another example, a circuit for performing such processing of measurements can be implemented on an endcap 730. Such a circuit can be configured to, for example, process the foregoing determination of the turn number based on the measured impedance change in the winding.

In some embodiments, and as described herein, measurements provided by the foregoing inductive sensor of Figure 11 does not need to have high-resolution performance if it is being utilized to determine such turn numbers. In some embodiments, such turn numbers can include multiple turns of the rotatable shaft 700.

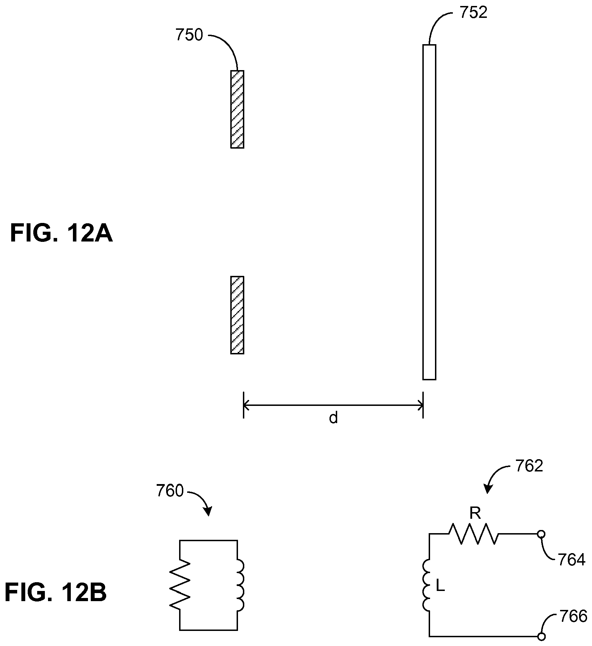

Figure 12A shows an isolated view of an inductive sensing configuration that can be utilized in the examples of Figures 10 and 11. As described herein, such a sensing configuration can include a metal target 750 (666 in Figure 10, 726 in Figure 11) and a coil 752 (668 in Figure 10, 728 in Figure 11). As shown in the side view of Figure 12A, the metal target 750 and the coil 752 can be separated by a distance of d. As described herein, such a separation distance can be varied longitudinally by the rotation of a shaft (not shown in Figure 12A).

The distance d can determine the amount of inductive coupling between the metal target 750 and the coil 752. Such an inductive coupling can be represented as a circuit shown in Figure 12B. More particularly, when an AC signal is provided between nodes 764 and 766 of an LR circuit 762 representative of the coil 752, Eddy current can be established in an LR loop 760 representative of the metal target 750. Accordingly, inductive coupling between the LR loop 760 and the LR circuit 762 can be modeled as a transformer, which results in the impedance R varying with the separation distance d. Such variation in R can be measured in a number of ways, including, for example, by formation of an LC circuit on the coil side and measuring a resonance impedance to reduce power consumption of the rotation sensor 104.

The present disclosure describes various features, no single one of which is solely responsible for the benefits described herein. It will be understood that various features described herein may be combined, modified, or omitted, as would be apparent to one of ordinary skill. Other combinations and sub-combinations than those specifically described herein will be apparent to one of ordinary skill, and are intended to form a part of this disclosure. Various methods are described herein in connection with various flowchart steps and/or phases. It will be understood that in many cases, certain steps and/or phases may be combined together such that multiple steps and/or phases shown in the flowcharts can be performed as a single step and/or phase. Also, certain steps and/or phases can be broken into additional sub-components to be performed separately. In some instances, the order of the steps and/or phases can be rearranged and certain steps and/or phases may be omitted entirely. Also, the methods described herein are to be understood to be open-ended, such that additional steps and/or phases to those shown and described herein can also be performed.

Some aspects of the systems and methods described herein can advantageously be implemented using, for example, computer software, hardware, firmware, or any combination of computer software, hardware, and firmware. Computer software can comprise computer executable code stored in a computer readable medium (e.g., non-transitory computer readable medium) that, when executed, performs the functions described herein. In some embodiments, computer-executable code is executed by one or more general purpose computer processors. A skilled artisan will appreciate, in light of this disclosure, that any feature or function that can be implemented using software to be executed on a general purpose computer can also be implemented using a different combination of hardware, software, or firmware. For example, such a module can be implemented completely in hardware using a combination of integrated circuits. Alternatively or additionally, such a feature or function can be implemented completely or partially using specialized computers designed to perform the particular functions described herein rather than by general purpose computers.

Multiple distributed computing devices can be substituted for any one computing device described herein. In such distributed embodiments, the functions of the one computing device are distributed (e.g., over a network) such that some functions are performed on each of the distributed computing devices.

Some embodiments may be described with reference to equations, algorithms, and/or flowchart illustrations. These methods may be implemented using computer program instructions executable on one or more computers. These methods may also be implemented as computer program products either separately, or as a component of an apparatus or system. In this regard, each equation, algorithm, block, or step of a flowchart, and combinations thereof, may be implemented by hardware, firmware, and/or software including one or more computer program instructions embodied in computer-readable program code logic. As will be appreciated, any such computer program instructions may be loaded onto one or more computers, including without limitation a general purpose computer or special purpose computer, or other programmable processing apparatus to produce a machine, such that the computer program instructions which execute on the computer(s) or other programmable processing device(s) implement the functions specified in the equations, algorithms, and/or flowcharts. It will also be understood that each equation, algorithm, and/or block in flowchart illustrations, and combinations thereof, may be implemented by special purpose hardware-based computer systems which perform the specified functions or steps, or combinations of special purpose hardware and computer-readable program code logic means.

Furthermore, computer program instructions, such as embodied in computer-readable program code logic, may also be stored in a computer readable memory (e.g., a non-transitory computer readable medium) that can direct one or more computers or other programmable processing devices to function in a particular manner, such that the instructions stored in the computer-readable memory implement the function(s) specified in the block(s) of the flowchart(s). The computer program instructions may also be loaded onto one or more computers or other programmable computing devices to cause a series of operational steps to be performed on the one or more computers or other programmable computing devices to produce a computer-implemented process such that the instructions which execute on the computer or other programmable processing apparatus provide steps for implementing the functions specified in the equation(s), algorithm(s), and/or block(s) of the flowchart(s).

Some or all of the methods and tasks described herein may be performed and fully automated by a computer system. The computer system may, in some cases, include multiple distinct computers or computing devices (e.g., physical servers, workstations, storage arrays, etc.) that communicate and interoperate over a network to perform the described functions. Each such computing device typically includes a processor (or multiple processors) that executes program instructions or modules stored in a memory or other non-transitory computer-readable storage medium or device. The various functions disclosed herein may be embodied in such program instructions, although some or all of the disclosed functions may alternatively be implemented in application-specific circuitry (e.g., ASICs or FPGAs) of the computer system. Where the computer system includes multiple computing devices, these devices may, but need not, be co-located. The results of the disclosed methods and tasks may be persistently stored by transforming physical storage devices, such as solid state memory chips and/or magnetic disks, into a different state.

Unless the context clearly requires otherwise, throughout the description and the claims, the words "comprise," "comprising," and the like are to be construed in an inclusive sense, as opposed to an exclusive or exhaustive sense; that is to say, in the sense of "including, but not limited to." The word "coupled", as generally used herein, refers to two or more elements that may be either directly connected, or connected by way of one or more intermediate elements. Additionally, the words "herein," "above," "below," and words of similar import, when used in this application, shall refer to this application as a whole and not to any particular portions of this application. Where the context permits, words in the above Detailed Description using the singular or plural number may also include the plural or singular number respectively. The word "or" in reference to a list of two or more items, that word covers all of the following interpretations of the word: any of the items in the list, all of the items in the list, and any combination of the items in the list. The word "exemplary" is used exclusively herein to mean "serving as an example, instance, or illustration." Any implementation described herein as "exemplary" is not necessarily to be construed as preferred or advantageous over other implementations.

The disclosure is not intended to be limited to the implementations shown herein. Various modifications to the implementations described in this disclosure may be readily apparent to those skilled in the art, and the generic principles defined herein may be applied to other implementations without departing from the spirit or scope of this disclosure. The teachings of the invention provided herein can be applied to other methods and systems, and are not limited to the methods and systems described above, and elements and acts of the various embodiments described above can be combined to provide further embodiments. Accordingly, the novel methods and systems described herein may be embodied in a variety of other forms; furthermore, various omissions, substitutions and changes in the form of the methods and systems described herein may be made without departing from the spirit of the disclosure. The accompanying claims and their equivalents are intended to cover such forms or modifications as would fall within the scope and spirit of the disclosure.

**Claims**

1. A position sensing device comprising:

   a shaft (650) having a longitudinal axis;
   a first sensor assembly (102) having a magnet (152) and a magnetic sensor (162), the magnet coupled to an end of the shaft, the magnetic sensor positioned relative to the magnet such that the first sensor assembly allows measurement of an angular position of the magnet relative to the magnetic sensor to thereby allow determination of the corresponding angular position of the shaft within a given turn of the shaft; and
   a second sensor assembly (104) coupled to the shaft and configured to allow measurement of a turn-number of the shaft, the second sensor assembly including an inductive element having a conductive coil (668) implemented as a winding of conductive trace around the shaft on a substantially flat substrate such that the winding defines a plane having a normal direction approximately parallel with the longitudinal axis, the second sensor assembly further including a washer-shaped metal target (666) coupled to the shaft such that the shaft extends through an opening of the washer-shaped metal target, and such that rotation of the shaft results in longitudinal movement of the washer-shaped metal target relative to the winding, the washer-shaped metal target and the winding configured such that an application of an AC signal to the winding results in a detectable change in impedance of the winding due to an inductive coupling between the winding and Eddy currents established on the washer-shaped metal target, the change in impedance depending on a longitudinal separation distance between the washer-shaped metal target and the winding to thereby allow the measurement of the turn-number of the shaft.

**2.** The device of Claim 1, wherein the first sensor assembly (102) has an angular resolution, such that the turn-number being measured by the second sensor assembly (104) allows the angular resolution to be substantially maintained throughout a number of turns of the shaft (650).

**3.** The device of Claim 1, wherein the magnet (152) is configured to be bipolar and diametrally magnetized so as to yield variable orthogonal and parallel magnetic fluxes to the magnetic sensor (162).

**4.** The device of Claim 3, wherein the magnetic sensor (162) includes a plurality of Hall-effect sensors, a plurality of sine-cosine magneto-resistive (MR) sensors, a plurality of giant magnetic resistive (GMR) sensors, or an integrated vertical Hall sensor.

**5.** The device of Claim 1, wherein the second sensor assembly (104) further includes a target holder (664) configured to be thread-coupled to the shaft (650) to effectuate the longitudinal movement of the washer-shaped metal target (666) with the rotation of the shaft, and to hold the washer-shaped metal target relative to the shaft and the inductive element.

**6.** The device of Claim 1, wherein the shaft (700) is configured to provide a clutch functionality.

**7.** The device of Claim 1, wherein the first sensor assembly (102) is configured to provide an N-bit resolution to yield an angular resolution for the given turn of the shaft (650), and the second sensor assembly (104) is configured to provide an M-bit resolution sufficient to determine the turn-number of the shaft, such that the position sensing device has an effective M+N bit resolution over a range of number of turns of the shaft.

**8.** A method for sensing a position of a shaft having a longitudinal axis, the method comprising:

measuring with a first sensor assembly (102) an angular position of the shaft (650) within a given turn by sensing a magnet (152) that is coupled to an end of the shaft;

measuring with a second sensor assembly (104) a turn-number of the shaft, the second sensor assembly including an inductive element having a conductive coil (668) implemented as a winding of conductive trace around the shaft on a substantially flat substrate such that the winding defines a plane having a normal direction approximately parallel with the longitudinal axis, the second sensor assembly further including a washer-shaped metal target (666) coupled to the shaft such that the shaft extends through an opening of the washer-shaped metal target, and such that rotation of the shaft results in longitudinal movement of the washer-shaped metal target relative to the winding, the washer-shaped metal target and the winding configured such that an application of an AC signal to the winding results in a detectable change in impedance of the winding due to an inductive coupling between the winding and Eddy currents established on the washer-shaped metal target, the change in impedance depending on a longitudinal separation distance between the washer-shaped metal target and the winding to thereby allow the measurement of the turn-number of the shaft; and

combining the measured angular position of the shaft and the measured turn-number of the shaft.

**9.** The method of Claim 8, wherein the angular position and the turn-number are measured independently.

## Patentansprüche

**1.** Positionserfassungsvorrichtung, Folgendes umfassend:

eine Welle (650), die eine Längsachse aufweist;

eine erste Sensorbaugruppe (102), die einen Magneten (152) und einen Magnetsensor (162) aufweist, wobei der Magnet mit einem Ende der Welle gekoppelt ist, wobei der Magnetsensor in Bezug auf den Magneten derart positioniert ist, dass die erste Sensorbaugruppe eine Messung einer Winkelposition des Magneten in Bezug auf den Magnetsensor ermöglicht, um dadurch eine Bestimmung der entsprechenden Winkelposition der Welle innerhalb einer gegebenen Windung der Welle zu ermöglichen; und

eine zweite Sensorbaugruppe (104), die mit der Welle gekoppelt ist und dazu konfiguriert ist, eine Messung einer Windungszahl der Welle zu ermöglichen, wobei die zweite Sensorbaugruppe ein induktives Element beinhaltet, das eine leitende Spule (668) aufweist, die als eine Wicklung einer leitenden Spur auf einem im Wesentlichen flachen Substrat derart um die Welle umgesetzt ist, dass die Wicklung eine Ebene definiert, die eine normale Richtung aufweist, die ungefähr parallel mit der Längsachse ist, wobei die zweite Sensorbaugruppe ferner ein unterlegscheibenförmiges Metalltarget (666) beinhaltet, das derart mit der Welle gekoppelt ist, dass sich die Welle durch eine Öffnung des unterlegscheibenförmigen Metalltargets erstreckt, und derart gekoppelt ist, dass eine Drehung der Welle zu einer Längsbewegung des unterlegscheibenförmigen Metalltargets in Bezug auf die Wicklung führt, wobei das unterlegscheibenförmige Metalltarget und die Wicklung derart konfiguriert sind, dass ein Anlegen eines Wechselstromsignals an der Wicklung zu einer erkennbaren Veränderung der Impedanz der Wicklung aufgrund einer induktiven Kopplung zwischen der Wicklung und Wirbelströmen führt, die auf dem unterlegscheibenförmigen Metalltarget hergestellt werden, wobei die Veränderung der Impedanz von einer längsgerichteten Trennentfernung zwischen dem unterlegscheibenförmigen Metalltarget und der Wicklung abhängt, um dadurch die Messung der Windungszahl der Welle zu ermöglichen.

2. Vorrichtung nach Anspruch 1, wobei die erste Sensorbaugruppe (102) eine Winkelauflösung aufweist, sodass die Windungszahl, die durch die zweite Sensorbaugruppe (104) gemessen wird, es der Winkelauflösung ermöglicht, über eine Zahl von Windungen der Welle (650) im Wesentlichen beibehalten zu werden.

3. Vorrichtung nach Anspruch 1, wobei der Magnet (152) dazu konfiguriert ist, bipolar und diametral magnetisiert zu sein, um dem Magnetsensor (162) variable orthogonale und parallele Magnetflüsse zu liefern.

4. Vorrichtung nach Anspruch 3, wobei der Magnetsensor (162) eine Vielzahl von Hall-Effekt-Sensoren, eine Vielzahl von magnetoresistiven (MR) Sinus-Kosinus-Sensoren, eine Vielzahl von Sensoren mit Riesenmagnetwiderstand (giant magnetic resistive - GMR) oder einen integrierten vertikalen Hall-Sensor beinhaltet.

5. Vorrichtung nach Anspruch 1, wobei die zweite Sensorbaugruppe (104) ferner einen Targethalter (664) beinhaltet, der dazu konfiguriert ist, mit der Welle (650) gewindegekoppelt zu werden, um die Längsbewegung des unterlegscheibenförmigen Metalltargets (666) mit der Drehung der Welle zu bewirken, und das unterlegscheibenförmige Metalltarget in Bezug auf die Welle und das induktive Element zu halten.

6. Vorrichtung nach Anspruch 1, wobei die Welle (700) dazu konfiguriert ist, eine Kupplungsfunktion bereitzustellen.

7. Vorrichtung nach Anspruch 1, wobei die erste Sensorbaugruppe (102) dazu konfiguriert ist, eine N-bit-Auflösung bereitzustellen, um für die gegebene Windung der Welle (650) eine Winkelauflösung zu liefern, und die zweite Sensorbaugruppe (104) dazu konfiguriert ist, eine M-bit-Auflösung bereitzustellen, die ausreicht, um die Windungszahl der Welle zu bestimmen, sodass die Positionserfassungsvorrichtung eine tatsächliche M+N-bit-Auflösung über eine Reihe von einer Anzahl von Windungen der Welle aufweist.

8. Verfahren zum Erfassen einer Position einer Welle, die eine Längsachse aufweist, wobei das Verfahren Folgendes umfasst:

Messen einer Winkelposition der Welle (650) innerhalb einer gegebenen Windung mit einer ersten Sensorbaugruppe (102) durch Erfassen eines Magneten (152), der mit einem Ende der Welle gekoppelt ist;
Messen einer Windungszahl der Welle mit einer zweiten Sensorbaugruppe (104), wobei die zweite Sensorbaugruppe ein induktives Element beinhaltet, das eine leitende Spule (668) aufweist, die als eine Wicklung einer leitenden Spur auf einem im Wesentlichen flachen Substrat derart um die Welle umgesetzt ist, dass die Wicklung eine Ebene definiert, die eine normale Richtung aufweist, die ungefähr parallel mit der Längsachse ist, wobei die zweite Sensorbaugruppe ferner ein unterlegscheibenförmiges Metalltarget (666) beinhaltet, das derart mit der Welle gekoppelt ist, dass sich die Welle durch eine Öffnung des unterlegscheibenförmigen Metalltargets erstreckt, und derart gekoppelt ist, dass eine Drehung der Welle zu einer Längsbewegung des unterlegscheibenförmigen Metalltargets in Bezug auf die Wicklung führt, wobei das unterlegscheibenförmige Metalltarget und die Wicklung derart konfiguriert sind, dass ein Anlegen eines Wechselstromsignals an der Wicklung zu einer erkennbaren Veränderung der Impedanz der Wicklung aufgrund einer induktiven Kopplung zwischen der Wicklung und Wirbelströmen führt, die auf dem unterlegscheibenförmigen Metalltarget hergestellt werden, wobei die Veränderung der Impedanz von einer längsgerichteten Trennentfernung zwischen dem unterlegscheibenförmigen Metalltarget und der Wicklung abhängt, um dadurch die Messung der Windungszahl der Welle zu ermöglichen; und
Kombinieren der gemessenen Winkelposition der Welle und der gemessenen Windungszahl der Welle.

9. Verfahren nach Anspruch 8, wobei die Winkelposition und die Windungszahl unabhängig gemessen werden.

14

**Revendications**

1. Dispositif de détection de position comprenant :

   un arbre (650) ayant un axe longitudinal ;
   un premier ensemble capteur (102) ayant un aimant (152) et un capteur magnétique (162), l'aimant étant couplé à une extrémité de l'arbre, le capteur magnétique étant positionné par rapport à l'aimant de sorte que le premier ensemble capteur permet la mesure d'une position angulaire de l'aimant par rapport au capteur magnétique pour permettre ainsi la détermination de la position angulaire correspondante de l'arbre dans un tour donné de l'arbre ; et
   un second ensemble capteur (104) couplé à l'arbre et configuré pour permettre la mesure d'un nombre de tours de l'arbre, le second ensemble capteur incluant un élément inductif ayant une bobine conductrice (668) réalisée sous la forme d'un enroulement de trace conductrice autour de l'arbre sur un substrat sensiblement plat de sorte que l'enroulement définit un plan ayant une direction normale approximativement parallèle à l'axe longitudinal, le second ensemble capteur incluant en outre une cible métallique en forme de rondelle (666) couplée à l'arbre de sorte que l'arbre s'étend à travers une ouverture de la cible métallique en forme de rondelle, et de sorte que la rotation de l'arbre entraîne un mouvement longitudinal de la cible métallique en forme de rondelle par rapport à l'enroulement, la cible métallique en forme de rondelle et l'enroulement étant configurés de sorte qu'une application d'un signal CA à l'enroulement entraîne une modification détectable de l'impédance de l'enroulement en raison d'un couplage inductif entre les courants d'enroulement et de Foucault établi sur la cible métallique en forme de rondelle, la modification de l'impédance dépendant d'une distance de séparation longitudinale entre la cible métallique en forme de rondelle et l'enroulement pour permettre ainsi la mesure du nombre de tours de l'arbre.

2. Dispositif selon la revendication 1, dans lequel le premier ensemble capteur (102) a une résolution angulaire, de sorte que le nombre de tours mesuré par le second ensemble capteur (104) permet à la résolution angulaire d'être sensiblement maintenue tout au long d'un nombre de tours de l'arbre (650).

3. Dispositif selon la revendication 1, dans lequel l'aimant (152) est configuré pour être bipolaire et magnétisé diamétralement de manière à produire des flux magnétiques orthogonaux et parallèles variables vers le capteur magnétique (162) .

4. Dispositif selon la revendication 3, dans lequel le capteur magnétique (162) inclut une pluralité de capteurs à effet Hall, une pluralité de capteurs magnéto-résistifs à sinus-cosinus (MR), une pluralité de capteurs à résistance magnétique géante (GMR), ou un capteur à effet Hall vertical intégré.

5. Dispositif selon la revendication 1, dans lequel le second ensemble capteur (104) inclut en outre un support de cible (664) configuré pour être couplé par filetage à l'arbre (650) afin d'effectuer le mouvement longitudinal de la cible métallique en forme de rondelle (666) avec la rotation de l'arbre, et pour maintenir la cible métallique en forme de rondelle par rapport à l'arbre et à l'élément inductif.

6. Dispositif selon la revendication 1, dans lequel l'arbre (700) est configuré pour fournir une fonctionnalité d'embrayage.

7. Dispositif selon la revendication 1, dans lequel le premier ensemble capteur (102) est configuré pour fournir une résolution à N bits pour obtenir une résolution angulaire pour le tour donné de l'arbre (650), et le second ensemble capteur (104) est configuré pour fournir une résolution de M bits suffisante pour déterminer le nombre de tours de l'arbre, de sorte que le dispositif de détection de position a une résolution effective de bits M+N sur une plage de nombres de tours de l'arbre.

8. Procédé de détection d'une position d'un arbre ayant un axe longitudinal, le procédé comprenant :

   la mesure, avec un premier ensemble capteur (102), d'une position angulaire de l'arbre (650) dans un tour donné par la détection d'un aimant (152) qui est couplé à une extrémité de l'arbre ;
   la mesure, avec un second ensemble capteur (104), d'un nombre de tours de l'arbre, le second ensemble capteur incluant un élément inductif ayant une bobine conductrice (668) réalisée sous la forme d'un enroulement de trace conductrice autour de l'arbre sur un substrat sensiblement plat de sorte que l'enroulement définit un plan ayant une direction normale approximativement parallèle à l'axe longitudinal, le second ensemble capteur incluant en outre une cible métallique en forme de rondelle (666) couplée à l'arbre de sorte que l'arbre s'étend à travers une ouverture de la cible métallique en forme de rondelle, et de sorte que la rotation de l'arbre entraîne un mouvement longitudinal de la cible métallique en forme de rondelle par rapport à l'enroulement, la cible métallique en forme de rondelle et l'enroulement étant configurés de sorte qu'une application d'un signal CA à l'enroulement entraîne une modification détectable de l'impédance de l'enroulement en raison d'un couplage inductif entre les courants d'enroulement et de Foucault établi sur la cible métallique en forme de rondelle, la modification de l'impédance dépendant d'une distance de séparation longitudinale entre la cible métallique en forme de rondelle et l'enroulement pour permettre ainsi la mesure du nombre de tours de l'arbre ; et

la combinaison de la position angulaire mesurée de l'arbre et le nombre de tours mesuré de l'arbre.

9. Procédé selon la revendication 8, dans lequel la position angulaire et le nombre de tours sont mesurés indépendamment.

100

Angular
position
sensor

Rotation
sensor

102

104

# FIG. 1

FIG. 2

EP 3 044 550 B1

**FIG. 3**

FIG. 4A

FIG. 4B

**FIG. 5A**

**FIG. 5B**

**FIG. 5C**

**FIG. 5D**

FIG. 6A

FIG. 6B

FIG. 6C

FIG. 7

100

| Angular position sensor | Electrical rotation sensor |
|---|---|
| 102 | 104 |

**FIG. 8A**

100

| Angular position sensor | Magnetic rotation sensor |
|---|---|
| 102 | 104 |

**FIG. 8B**

100

| Angular position sensor | Electromagnetic rotation sensor |
|---|---|
| 102 | 104 |

**FIG. 8C**

**FIG. 9**

EP 3 044 550 B1

**FIG. 10**

**FIG. 11**

EP 3 044 550 B1

750

752

**FIG. 12A**

d

760

762

**FIG. 12B**

R

L

764

766

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102010030801

- US 2010163333 A